# EUROPÄISCHE PATENTSCHRIFT

(11) **EP 4 127 319 B1**
(45) Veröffentlichungstag und Bekanntmachung des Hinweises auf die Patenterteilung: **09.09.2026**
(21) Anmeldenummer: 21707753.6
(22) Anmeldetag: 02.03.2021
(51) Int. Cl.: E01B 27/16

(54) **SYSTEM ZUM BEARBEITEN EINES GLEISES**
SYSTEM FOR WORKING ON A TRACK
SYSTÈME POUR TRAVAILLER SUR UNE VOIE FERRÉE

(30) Priorität: 01.04.2020 EP 20167556
(43) Veröffentlichungstag der Anmeldung: 08.02.2023
(73) Patentinhaber: Plasser & Theurer Export von Bahnbaumaschinen Gesellschaft m.b.H., 1010 Wien (AT)
(72) Erfinder: PHILIPP, Thomas, 4060 Leonding (AT)
(86) Internationale Anmeldenummer: PCT/EP2021/055146
(87) Internationale Veröffentlichungsnummer: WO 2021/197741

(56) Entgegenhaltungen:
- AT-A1- 520 698
- DE-U1- 202008 010 351

## Beschreibung

### Technisches Gebiet

Die Erfindung betrifft ein System zum Bearbeiten eines Gleises mit einer Gleisbaumaschine, welche eine Maschinensteuerung und ein damit angesteuertes Arbeitsaggregat umfasst, wobei Sensoren zur Überwachung von Arbeitsgrößen angeordnet sind. Zudem betrifft die Erfindung ein Verfahren zum Betreiben des Systems.

### Stand der Technik

Aus der AT 520 698 A1 ist ein gattungsgemäßes System bekannt. Das System dient der Belastungsüberwachung eines Stopfaggregats während der Bearbeitung eines Gleises. Dazu sind Sensoren angeordnet, die über eine Zeitspanne hinweg Messdaten erfassen und an eine Auswerteeinrichtung weiterleiten. Aus den Messdaten wird ein BelastungsZeit-Verlauf für zyklische Arbeitsvorgänge des Stopfaggregats abgeleitet. Daraus gewonnene Rückschlüsse auf die Belastungssituation des Stopfaggregats werden genutzt, um Instandhaltungsmaßnahmen bzw. Instandhaltungsintervalle vorzugeben.

### Darstellung der Erfindung

Der Erfindung liegt die Aufgabe zugrunde, den Nutzen der in einem System der eingangs genannten Art vorhandenen Sensoren zu erweitern. Des Weiteren soll ein entsprechend verbessertes Verfahren zum Betreiben des Systems angegeben werden.

Erfindungsgemäß werden diese Aufgaben gelöst durch die Merkmale der unabhängigen Ansprüche 1 und 10. Abhängige Ansprüche geben vorteilhafte Ausgestaltungen der Erfindung an.

Dabei ist vorgesehen, dass die Sensoren zu einer separaten Erfassung von Sensordaten mit einem Datenerfassungsmodul gekoppelt sind und dass das Datenerfassungsmodul verbunden ist mit einer Rechnereinheit, in der ein erster Algorithmus zur Berechnung von Ergebnisdaten aus den Sensordaten eingerichtet ist. Auf dieses Weise umfasst das System zusätzliche Strukturkomponenten zur Verarbeitung von Sensorsignalen. Mit dem Datenerfassungsmodul und der Rechnereinheit, in welcher der anwendungsspezifische Algorithmus eingerichtet ist, sind unabhängig von einer bestehenden Überwachungsfunktion unterschiedliche Auswertungen des Arbeitsbetriebes durchführbar. Konkrete Vorteile ergeben sich durch eine flexible Konfiguration der Sensordatenerfassung und durch die Anpassungsmöglichkeit der Ergebnisdatenberechnung.

In einer Weiterbildung ist die Rechnereinheit zur Berechnung zumindest einer Kenngröße aus den während eines Arbeitsvorgangs erfassten Sensordaten eingerichtet, wobei insbesondere die Rechnereinheit mit der Maschinensteuerung zur automatisierten Vorgabe optimierter Arbeitsparameter gekoppelt ist. Damit wird eine fortlaufende Verbesserung der mit dem Arbeitsaggregat durchgeführten Arbeitsvorgänge erreicht. Die berechnete Kenngröße ist auf das im Einsatz befindliche Arbeitsaggregat abgestimmt und charakterisiert die Qualität des entsprechenden Arbeitsvorganges. Ergebnis dieser Verbesserung ist ein übergeordneter Regelkreis auf der Ebene eines Leitsystems.

Vorteilhafterweise ist das Datenerfassungsmodul zur mehrkanaligen Datenerfassung eingerichtet und als Slave mit der als Master ausgebildeten Rechnereinheit gekoppelt. Diese Systemarchitektur ermöglicht eine effiziente Anschaltung mehrerer Sensoren an das aus Datenerfassungsmodul und Rechnereinheit bestehende Subsystem.

Erfindungsgemäß ist zur Überwachung des Arbeitsaggregats eine Überwachungseinrichtung angeordnet, welche die Sensordaten mit einer niedrigeren Abtastrate (z.B. 1 Hz) als das Datenerfassungsmodul (z.B. Abtastrate im kHz-Bereich) erfasst. Damit ist für die Überwachung eine einfache, aber ausreichende Datenverarbeitung möglich. Für die zusätzliche Sensorauswertung mittels Rechnereinheit steht hingegen eine Datenbasis mit hoher zeitlicher Auflösung zur Verfügung.

Eine vorteilhafte Erweiterung des Systems sieht vor, dass die Rechnereinheit über Kommunikationsmittel mit einer Datenbank gekoppelt ist, um Programmdaten zum Ändern des ersten Algorithmus oder zum Einrichten eines zweiten Algorithmus zu empfangen. Damit sind die mittels der Rechnereinheit durchgeführten Auswertungen auf einfache Weise modifizierbar. Mit dem System sind neue Analysen des Arbeitsvorgangs durchführbar, ohne strukturelle Veränderungen vornehmen zu müssen. Zudem können neue Auswertealgorithmen mit dem System getestet werden, bevor Anpassungen des Arbeitsvorgangs abgeleitet werden.

Dabei ist es von Vorteil, wenn die Kommunikationsmittel einen VPN-Router umfassen. Alle mit diesem VPN-Router verbundene Geräte können somit einen gesicherten VPN-Tunnel nutzen. Das betrifft die Rechnereinheit und weitere Systemkomponenten, die Daten mit der Datenbank austauschen. Der systemintegrierte VPN-Router erweitert die Möglichkeiten einer sicheren Übertragung diverser Daten.

In einer weiteren Verbesserung ist die Rechnereinheit mit einer Speichereinrichtung verbunden, um Sensordaten und/oder Ergebnisdaten abzuspeichern. Günstigerweise ist die Speichereinrichtung so dimensioniert, dass alle Ergebnisdaten und gegebenenfalls auch alle Sensordaten bis zum Ende eines vorgegebenen Ausleseintervalls abgespeichert werden. Beispielsweise entspricht das Ausleseintervall einem Wartungsintervall des überwachten Arbeitsaggregates. Auf der Speichereinrichtung abgelegte Daten sind zudem jederzeit mittels Remote-Zugang abrufbar, vorzugsweise über einen VPN-Tunnel. Sinnvoll ist insbesondere die Übertragung der Ergebnisdaten über den Remote-Zugang. Das große Datenvolumen der Sensordaten wird hingegen in der Speichereinrichtung gesichert und bei Revisionen des Systems ausgelesen.

Damit Ergebnisdaten und gegebenenfalls Sensordaten zentral zu Verfügung stehen ist es von Vorteil, wenn die Rechnereinheit zur Datenübertragung über ein Modem mit einem Rechnernetzwerk (Cloud) gekoppelt ist. Auf diese Weise kann über eine Online-Anwendung (Web-App) jederzeit auf die Daten zugegriffen werden.

Vorteilhafte Ausprägungen des Systems umfassen als Arbeitsaggregat ein Stopfaggregat und/oder ein Stabilisationsaggregat. Solche Arbeitsaggregate umfassende vibrierende Werkzeuge, die Schwingungen in ein bearbeitetes Schottergleis einleiten. Mit an den Arbeitsaggregaten angeordneten Sensoren lassen sich Rückschlüsse auf die Qualität einer Gleisschotterbettung und einer Verdichtung des Gleisschotters gewinnen. Somit liefert das System nicht nur Aufschlüsse über den Zustand und die Arbeitsweise des Arbeitsaggregats an sich, sondern auch über den Zustand und die Bearbeitung des Gleises.

Günstigerweise ist als Sensor ein Bewegungssensor zur Erfassung eines Schwingungszyklus angeordnet. Sowohl beim Stopfaggregat als auch beim Stabilisationsaggregat sind die Bewegungs- und Kraftverläufe während eines Schwingungszyklus nutzbar, um Kennwerte für einen Verdichtungsvorgang zu gewinnen.

Beim erfindungsgemäßen Verfahren zum Betreiben des Systems werden mittels der Sensoren Sensorsignale zur Überwachung des Arbeitsaggregats generiert, wobei die Sensorsignale zur separaten Sensordatenerfassung dem Datenerfassungsmodul zugeführt werden und wobei aus den Sensordaten mittels des in der Rechnereinheit eingerichteten ersten Algorithmus Ergebnisdaten berechnet werden. Mit diesem Verfahrensablauf werden parallel zur Überwachung des Arbeitsaggregats aus den Sensordaten Ergebnisdaten abgeleitet. Dabei steht zunächst nicht die Ausprägung oder die Qualität der Ergebnisdaten im Vordergrund, sondern die Nutzung eines frei festlegbaren Algorithmus mittels der eigens dafür vorgesehenen Systemkomponenten. Das sind die Datenerfassungseinrichtung und die Rechnereinheit.

Eine vorteilhafte Weiterbildung dieses Verfahrens sieht vor, dass als Ergebnisdaten Kennwerte eines Arbeitsvorgangs berechnet und an die Maschinensteuerung übermittelt werden. Bei dieser sinnvollen Nutzung des Systems ermöglicht eine Regelschleife die automatisierte Verbesserung der Arbeitsvorgänge, die mittels des Arbeitsaggregats durchgeführt werden.

Verbessert wird das Verfahren durch eine einfach durchzuführende Anpassung des Algorithmus, wobei Programmdaten zum Ändern des ersten Algorithmus oder zum Einrichten eines zweiten Algorithmus auf die Rechnereinheit übertragen werden. Das geschieht entweder über eine Verbindung via VPN-Tunnel oder durch eine direkte Verbindung mit einem Computer, auf dem die Programmdaten bereitgestellt sind.

Dabei ist es von Vorteil, wenn in einem ersten Schritt neue Programmdaten in einen Speicher der Rechnereinheit geladen werden und wenn in einem zweiten Schritt nach einem Neustart der Rechnereinheit die neuen Programmdaten aktiviert werden. Mit diesem Zweischritt-Update-Prozess ist sichergestellt, dass eventuell fehlerhafte Programmdaten keinen Systemausfall nach sich ziehen. Da ein neues Programm erst nach dem Neustart aktiviert wird, befindet sich die Rechnereinheit (Prozessor) immer in einem definierten Zustand.

Sinnvollerweise werden Ergebnisdaten über einen VPN-Tunnel oder über eine Offline-Verbindung von der Rechnereinheit auf einen externen Computer übertragen. Die Daten stehen somit zentral oder dezentral zur Weiterverarbeitung zur Verfügung und können auf vielfältige Weise weiter genutzt und archiviert werden.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
- Fig. 1: Gleisbaumaschine
- Fig. 2: Blockschaltbild des Systems
- Fig. 3: Verarbeitung von Programmdaten
- Fig. 4: Verarbeitung von Sensor- und Ergebnisdaten

### Beschreibung der Ausführungsformen

Das System umfasst zum Beispiel als Gleisbaumaschine 1 zum Bearbeiten eines Gleises 2 eine Stopfmaschine. Eine solche Gleisbaumaschine 1 weist als Arbeitsaggregate 3 ein Stopfaggregat und ein Hebe-Richtaggregat auf. Ergänzend kann ein Stabilisierungsaggregat als Arbeitsaggregat 3 angeordnet sein. Angesteuert werden die Arbeitsaggregate 3 mittels einer Maschinensteuerung 4. Des Weiteren umfasst die Gleisbaumaschine 1 ein Messsystem 5 zur Erfassung einer Ist-Lage des Gleises 2.

Zur Überwachung des als Stopfaggregat ausgebildeten Arbeitsaggregats 3 sind Sensoren 6 angeordnet. Ein beispielhafter Sensor 6 ist in der österreichischen Patentanmeldung A 290/2018 derselben Anmelderin beschrieben. Am Stopfaggregat oder an den anderen Arbeitsaggregaten 3 angebrachte Sensoren 6 messen Beschleunigungen und/oder Kräfte, die auf einzelne Aggregatkomponenten wirken. Auch Temperaturmessungen können sinnvoll sein, um den Zustand eines Aggregats 3 zu überwachen.

Der jeweilige Sensor 6 generiert Sensorsignale S_{S}, die mittels eines Datenerfassungsmoduls 7 (Data Acquisition Modul, DAQ) erfasst und als Sensordaten S_{D} weiterverarbeitet werden. Dazu ist das Datenerfassungsmodul 7 mit einer Rechnereinheit 8 verbunden. In dieser Rechnereinheit 8 ist ein erster Algorithmus P₁ (Programm) eingerichtet, um aus den Sensordaten S_{D} Ergebnisdaten E_{D} zu berechnen. Diese Ergebnisdaten E_{D} dienen zur Bewertung der mit den Arbeitsaggregaten 3 durchgeführten Arbeitsvorgänge bzw. zur Bewertung der Beschaffenheit des bearbeiteten Gleises 2. Dazu umfassen die Ergebnisdaten E_{D} entsprechende Kennwerte.

Vorteilhafterweise sind die Rechnereinheit 8 und das Datenerfassungsmodul 7 in einer Master-Slave-Architektur zusammengeschaltet. Das Datenerfassungsmodul 7 umfasst zum Beispiel mehrere DAQ-Einheiten mit 12 bis 16 Kanälen, wobei jedem Kanal ein Sensorsignal S_{S} zugeführt ist. Das Datenerfassungsmodul 7 erfasst die Sensorsignale S_{S} mit einer hohen Abtastrate im Bereich von einigen Kilohertz, um für die nachfolgende Verarbeitung Sensordaten S_{D} mit hoher zeitlicher Auflösung zu generieren.

Für eine reine Überwachungsfunktion sind hingegen Sensordaten S_{D} mit geringerer Auflösung ausreichend. Gewöhnlich sind wenige Sensordaten S_{D} pro Zeiteinheit (z.B. Abtastrate 1 Hz) erforderlich, um den Verschleißverlauf einer Aggregatkomponente zu verfolgen und etwaige Wartungsmaßnahmen abzuschätzen. Deshalb ist sinnvollerweise für die Überwachungsfunktion eine separate Datenverarbeitung mit einer eigenen Datenerfassungseinheit 9 eingerichtet. Eine Überwachungseinrichtung 10 umfasst noch weitere Komponenten, beispielsweise einen Mikroprozessor 11 und ein Modem 12 zur Übertragung von Überwachungsdaten U_{D} an ein Rechnernetzwerk (Cloud) 13. Eine solche Überwachungseinrichtung 10 ist in der AT 520 698 A1 derselben Anmelderin beschrieben.

Ein Modem 12 der Überwachungseinrichtung 10 oder ein separates Modem wird sinnvollerweise auch für eine Übertragung der mit der Rechnereinheit 8 generierten Ergebnisdaten E_{D} genutzt. Auf diese Weise stehen die Ergebnisdaten E_{D} und gegebenenfalls mitübertragene Sensordaten S_{D} zentral im Rechnernetzwerk 13 zur Verfügung. Beispielsweise können die Daten S_{D}, E_{D} mittels einer abgesicherten Online-Anwendung (Web-App) auf einem Computer 14 mit Netzwerkanbindung angezeigt und weiterverarbeitet werden (Web-Access).

Als Rechnereinheit 8 umfasst die Gleisbaumaschine 1 beispielsweise einen hoch performanten Linux-Server. Damit ist es möglich, die mit hoher Abtastrate erfassten Signaldaten S_{D} in Echtzeit zu verarbeiten. Jedenfalls ist es sinnvoll, die Abtastrate des Datenerfassungsmoduls 7 und die Rechenleistung der Rechnereinheit 8 aufeinander abzustimmen, um eine Echtzeit-Berechnung von Ergebnisdaten E_{D} sicherzustellen. Somit sind diverse charakteristische Kenngrößen des Arbeitsvorgangs direkt auf der Gleisbaumaschine 1 ermittelbar.

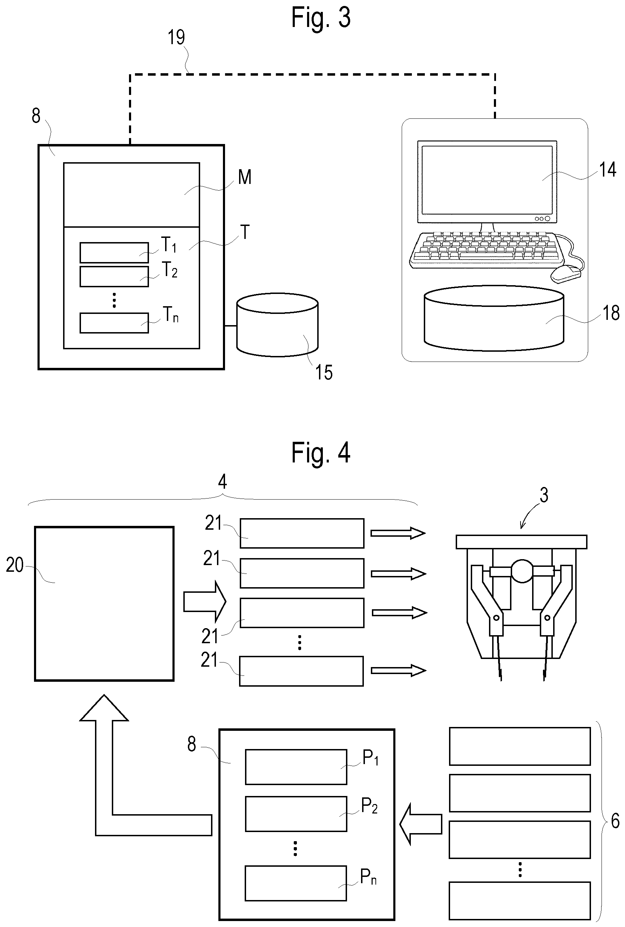

Zudem ist es vorteilhaft, wenn die Rechnereinheit 8 in der Weise ausgeführt ist, dass CPU-Kapazitäten auch für das Bearbeiten von fortgeschrittenen mathematischen Algorithmen zur Verfügung stehen. Bei diesen mathematischen Algorithmen handelt es sich um Modelle und Berechnungsalgorithmen für die Zustandsbewertung von Maschinenteilen und zur Anpassung von Arbeitsparametern. Alle in der Rechnereinheit 8 eingerichteten Algorithmen werden als Tasks T₁, T₂, Tₙ (Prozesse) ausgeführt. Konkret läuft auf der Rechnereinheit 8 eine Master-Anwendung M, die koordiniert einzelne Tasks T₁, T₂, Tₙ startet und initiiert (Fig. 3).

Zusätzlich oder alternativ zur Übertragung von Sensor- und Ergebnisdaten S_{D}, E_{D} an das Rechnernetzwerk 13 erfolgt eine Abspeicherung dieser Daten S_{D}, E_{D} in einer Speichereinrichtung 15, die mit der Rechnereinheit 8 verbunden ist. Beispielsweise ist in der Rechnereinheit 8 ein eigener Prozessor (Server) implementiert, der diverse Systemgrößen zusammenführt und die gewünschten Daten S_{D}, E_{D} auf einem Massenspeicher der Speichereinrichtung 15 ablegt. Über eine Datenschnittstelle 16 können die abgespeicherten Daten S_{D}, E_{D} auf einen Computer 14 übertragen werden, beispielsweise während einer Revision der Gleisbaumaschine 1.

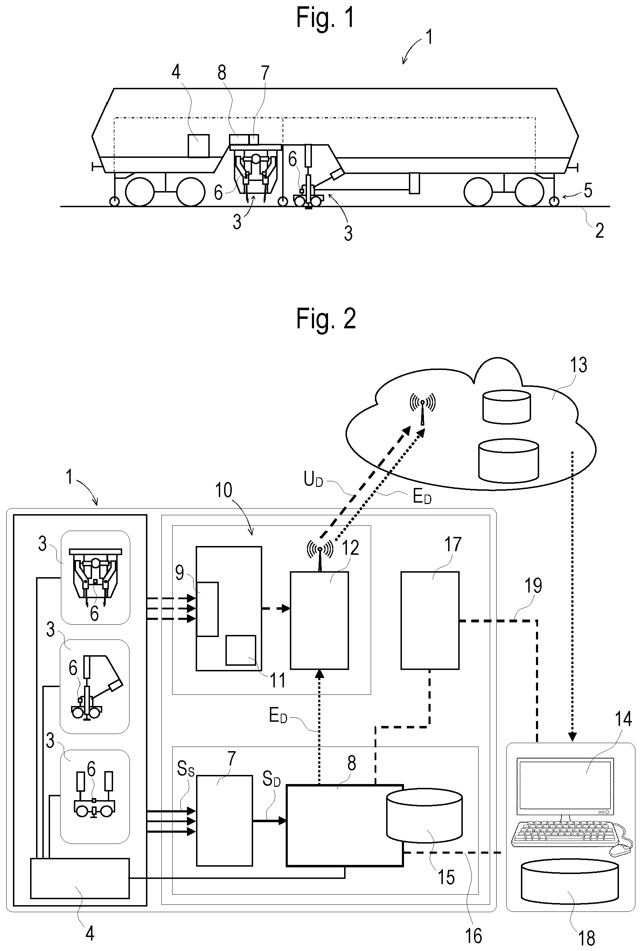

In der in Fig. 2 dargestellten Ausführungsvariante umfasst das System Kommunikationsmittel 17 zum Abgleich von Programmdaten mit einer Datenbank 18. Beispielsweise ist dafür ein VPN-Router vorgesehen, der mit der Rechnereinheit 8 verbunden ist. Auf diese Weise sind auch Sensor- und Ergebnisdaten S_{D}, E_{D} über einen VPN-Tunnel 19 übertragbar.

Vorteilhafterweise wird der VPN-Tunnel 19 auch für Software-Updates der Rechnereinheit 8 genutzt (Fig. 3). Dazu überprüft ein angestoßener Task Tₙ, ob in der Datenbank 18 ein neuer Algorithmus bereitsteht. Beispielsweise erfolgt zu diesem Zweck ein Abgleich mit den aktuellen Versionen der laufenden Tasks T₁, T₂. Gegebenenfalls wird ein geänderter Algorithmus P₁ oder ein neuer Algorithmus P₂ über den VPN-Tunnel 19 geladen, kompiliert und in die Taskliste T eingehängt. Durch einen Neustart der Rechnereinheit 8 werden die neuen Tasks gestartet und abgearbeitet.

Ein solches Update kann auch genutzt werden, um bisher nicht beachtete Vorgänge auf der Gleisbaumaschine 1 zu analysieren. Dabei wird zunächst ein neuer, an die zu analysierende Problemstellung angepasster Algorithmus P₂ in die Rechnereinheit 8 geladen und kompiliert. Beispielsweise schreibt ein entsprechender Task T₂ die Sensordaten S_{D} einiger ausgewählter Sensoren 6 in den Speicher 15, wenn ein vorgegebenes Ereignis auftritt. Nach einer ausreichenden Erfassungsdauer werden die gesammelten Daten S_{D}, E_{D} in das Rechnernetzwerk 13 hochgeladen und analysiert.

Eine Weiterentwicklung des Systems ist in Fig. 4 dargestellt. Das Arbeitsaggregat 3 wird mittels diverser Sensoren 6 überwacht. Über das Datenerfassungsmodul 7 liefern diese Sensoren 6 und weitere an der Gleisbaumaschine 1 angeordnete Sensoren 6 (Inertialmesseinheit, Laserschnittsensor, Hydraulikdruckmesser etc.) der Rechnereinheit 8 Sensordaten S_{D}. Mittels diverser Algorithmen P₁, P₂, Pₙ werden daraus steuerungsrelevante Kenngrößen als Ergebnisdaten E_{D} berechnet. Die jeweiligen Kennwerte werden in die Maschinensteuerung 4 zurückgespeist, wodurch in weiterer Folge ein aktiver Eingriff in den Arbeitsprozess erfolgt.

Dazu umfasst die Maschinensteuerung 4 (Steuerungssystem der Gleisbaumaschine 1) eine zentrale Steuerung 20, mittels derer mehrere dezentrale Subsysteme 21 koordiniert werden. Das sind beispielsweise ein Subsystem 21 für eine Drehzahlverstellung eines Exzenterantriebs zur Schwingungserzeugung, ein Subsystem 21 für eine Pickelöffnungsweite eines Stopfaggregats, ein Subsystem 21 für eine Eintauchautomatik für Stopfpickel und ein Subsystem 21 für die Aggregatpositionierung.

Somit werden physikalische Größen des beeinflussten Arbeitsvorgangs erfasst und gemessen. Die erfassten Größen werden als Datenstrom der Rechnereinheit 8 zugeführt, wobei alle Tasks T₁, T₂, Tₙ vollen Zugriff auf diese Sensordaten S_{D} haben. Bei der Ausführung der Tasks T₁, T₂, Tₙ werden charakteristische Kenngrößen des Arbeitsvorganges ermittelt. Diese Kenngrößen werden anschließend an die zentrale Steuerung 20 rückgeführt, um den Subsystemen 21 optimierte Arbeitsparameter vorzugeben. Auf diese Weise ist ein übergeordneter Regelkreis mit einem beobachtungsbasierten Regler auf Ebene eines Leitsystems eingerichtet.

In einer vorteilhaften Weiterbildung erfolgt die Berechnung der optimierten Arbeitsparameter direkt in der Rechnereinheit 8. Dazu sind in der Rechnereinheit 8 entsprechende Algorithmen P₁, P₂, Pₙ eingerichtet. Der zentralen Steuerung 20 werden die neu berechneten Arbeitsparameter vorgegeben. In der Maschinensteuerung 4 selbst findet somit keine Parameterberechnung statt. Für die Maschinensteuerung 4 geltende Sicherheitsanforderungen werden auf diese Weise nicht beeinträchtigt.

Die Vorgabe neuer Arbeitsparameter wird am Beispiel der Mehrfachstopfung mittels eines Stopfaggregats eingehender erläutert. Bei einer Mehrfachstopfung werden vibrierende Stopfpickel an derselben Stelle mehrmals in ein Schotterbett abgesenkt und beigestellt, um die Schotterverdichtung zu verbessern.

Für die Parameteroptimierung erfolgt zunächst die Erfassung von Sensordaten S_{D} über einen längeren Beobachtungszeitraum hinweg. Beispielsweise werden Drücke und Hübe von Beistellzylindern des Stopfaggregats aufgezeichnet. Für jeden aufgezeichneten Stopfzyklus werden charakteristische Kenngrößen berechnet, die in einem nächsten Schritt als Basisdaten dienen.

Die mit dem vorliegenden System erfassten Basisdaten stehen offline zur Verfügung, um ein Vorhersagemodell zu trainieren. Konkret dienen die aufgezeichneten Daten und eine jeweilige Zielvariable (Anzahl der Stopfvorgänge pro Stopfzyklus) als Trainingsdaten. Das trainierte Vorhersagemodell entspricht einem neuen Algorithmus P₂, der eine Vorhersage der Zielvariable ermöglicht.

Durch Testen und Validieren kann der neue Algorithmus P₂ weiter verbessert werden. Herangezogene Testdaten unterscheiden sich von den zuvor genutzten Trainingsdaten. Die Vorhersagen der Zielvariablen werden mit vorgegebenen Zielwerten abgestimmt, um die Qualität des Vorhersagemodells zu bewerten. Gegebenenfalls wird der Algorithmus P₂ einem neuerlichen Trainingsschritt unterzogen, um die Vorhersagequalität zu verbessern.

Mit dem fertigen Algorithmus P₂ erfolgt die Vorgabe des jeweiligen Arbeitsparameters (Zielvariable) in Echtzeit direkt auf der Gleisbaumaschine 1. Bereits beim Eindringen der Stopfpickel in das Schotterbett liefern die Sensoren 6 aussagekräftige Sensordaten S_{D} zur Berechnung von Kenngrößen für die Beschaffenheit des Schotterbettes. Jedenfalls liegen bei Beendigung eines ersten Stopfvorgangs genügend Sensordaten S_{D} vor, um verlässliche Ergebnisdaten E_{D} zu berechnen. Im vorliegenden Beispiel geben die Ergebnisdaten E_{D} der Maschinensteuerung 4 in Echtzeit vor, ob ein weiterer Stopfvorgang an derselben Stelle notwendig ist, um eine gewünschte Verdichtung zu erzielen.

Ein weiterer Vorteil des vorliegenden Systems ergibt sich bei Mehrschwellen-Stopfaggregaten mit mehreren hintereinander angeordneten Stopfeinheiten. Diese Stopfeinheiten werden gemeinsam in ein Schotterbett abgesenkt, um gleichzeitig mehrere Schwellen zu unterstopfen. Hier werden die in Echtzeit erfassten und verarbeiteten Sensordaten S_{D} genutzt, um die einzelnen Stopfeinheiten unterschiedlich anzusteuern. Konkret wird die beim Eintauchen der Stopfpickel ermittelte Beschaffenheit des Schotterbetts für eine Vorgabe von unterschiedlichen Beistelldrücken herangezogen. Gegebenenfalls werden den einzelnen Stopfeinheiten auch unterschiedliche Beistellzeiten vorgegeben. Bei gleichzeitiger Unterstopfung über mehrere Schwellen hinweg besteht nämlich zuweilen das Problem, dass das Schotterbett im Ausgangszustand unter jeder Schwelle eine unterschiedliche Schotterverdichtung aufweist.

Für jede Stopfeinheit zeigt ein aus den zugeordneten Sensordaten S_{D} berechneter Kennwert bereits während eines Eintauchvorgangs den jeweiligen Verdichtungsgrad an der betreffenden Stelle des Schotterbettes an. Mittels eines entsprechenden Algorithmus P2 wird der jeweiligen Substeuerung ein angepasster Beistelldruck und gegebenenfalls eine angepasste Beistelldauer vorgegeben. An Stellen mit bereits erhöhtem Verdichtungsgrad wird weniger Stopfenergie in das Schotterbett eingebracht, indem der Beistelldruck und die Beistellzeit reduziert werden. An Eintauchstellen mit geringem Verdichtungsgrad erfolgt jedoch eine Beistellung mit erhöhtem Druck und längerer Dauer. Damit wird über den mit dem Mehrfach-Stopfaggregat bearbeiteten Bettungsabschnitt eine homogene Verdichtung des Schotters erreicht.

## Patentansprüche

1. System zum Bearbeiten eines Gleises (2), wobei das System eine Gleisbaumaschine (1) aufweist, welche eine Maschinensteuerung (4) und ein damit angesteuertes Arbeitsaggregat (3) umfasst, wobei Sensoren (6) zur Überwachung des Arbeitsaggregats (3) angeordnet sind, **dadurch gekennzeichnet, dass** die Sensoren (6) zu einer separaten Erfassung von Sensordaten (S_{D}) mit einem Datenerfassungsmodul (7) gekoppelt sind und dass das Datenerfassungsmodul (7) verbunden ist mit einer Rechnereinheit (8), in der ein erster Algorithmus (P₁) zur Berechnung von Ergebnisdaten (E_{D}) aus den Sensordaten (S_{D}) eingerichtet ist und dass zur Überwachung des Arbeitsaggregats (3) eine Überwachungseinrichtung (10) angeordnet ist, welche die Sensordaten (S_{D}) mit einer niedrigeren Abtastrate als das Datenerfassungsmodul (7) erfasst.

2. System nach Anspruch 1, **dadurch gekennzeichnet, dass** die Rechnereinheit (8) zur Berechnung zumindest einer Kenngröße aus den während eines Arbeitsvorgangs erfassten Sensordaten (SD) eingerichtet ist und dass insbesondere die Rechnereinheit (8) mit der Maschinensteuerung (4) zur automatisierten Vorgabe optimierter Arbeitsparameter gekoppelt ist.

3. System nach Anspruch 1 oder 2, **dadurch gekennzeichnet, dass** das Datenerfassungsmodul (7) zur mehrkanaligen Datenerfassung eingerichtet und als Slave mit der als Master ausgebildeten Rechnereinheit (8) gekoppelt ist.

4. System nach einem der Ansprüche 1 bis 3, **dadurch gekennzeichnet, dass** die Rechnereinheit (8) über Kommunikationsmittel (17) mit einer Datenbank (18) gekoppelt ist, um Programmdaten zum Ändern des ersten Algorithmus (P₁) oder zum Einrichten eines zweiten Algorithmus (P₂) zu empfangen.

5. System nach Anspruch 4, **dadurch gekennzeichnet, dass** die Kommunikationsmittel (17) einen VPN-Router umfassen.

6. System nach einem der Ansprüche 1 bis 5, **dadurch gekennzeichnet, dass** die Rechnereinheit (8) mit einer Speichereinrichtung (15) verbunden ist, um Sensordaten (S_{D}) und/oder Ergebnisdaten (E_{D}) abzuspeichern.

7. System nach einem der Ansprüche 1 bis 6, **dadurch gekennzeichnet, dass** die Rechnereinheit (8) zur Datenübertragung über ein Modem (12) mit einem Rechnernetzwerk (13) gekoppelt ist.

8. System nach einem der Ansprüche 1 bis 7, **dadurch gekennzeichnet, dass** es als Arbeitsaggregat (3) ein Stopfaggregat und/oder ein Stabilisierungsaggregat umfasst.

9. System nach Anspruch 8, **dadurch gekennzeichnet, dass** als Sensor (6) ein Bewegungssensor zur Erfassung eines Schwingungszyklus angeordnet ist.

10. Verfahren zum Betreiben eines Systems nach einem der Ansprüche 1 bis 9, wobei mittels der Sensoren (6) Sensorsignale (S_{S}) zur Überwachung des Arbeitsaggregats (3) generiert werden, **dadurch gekennzeichnet, dass** die Sensorsignale (S_{S}) zur separaten Sensordatenerfassung dem Datenerfassungsmodul (7) zugeführt werden und dass aus den Sensordaten (S_{D}) mittels des in der Rechnereinheit (8) eingerichteten ersten Algorithmus (P₁) Ergebnisdaten (E_{D}) berechnet werden.

11. Verfahren nach Anspruch 10, **dadurch gekennzeichnet, dass** als Ergebnisdaten (E_{D}) Kennwerte eines Arbeitsvorgangs berechnet und an die Maschinensteuerung (4) übermittelt werden.

12. Verfahren nach Anspruch 10 oder 11, **dadurch gekennzeichnet, dass** Programmdaten zum Ändern des ersten Algorithmus (P₁) oder zum Einrichten eines zweiten Algorithmus (P₂) auf die Rechnereinheit (8) übertragen werden.

13. Verfahren nach Anspruch 12, **dadurch gekennzeichnet, dass** in einem ersten Schritt neue Programmdaten in einen Speicher der Rechnereinheit (8) geladen werden und dass in einem zweiten Schritt nach einem Neustart der Rechnereinheit (8) die neuen Programmdaten aktiviert werden.

14. Verfahren nach einem der Ansprüche 10 bis 13, **dadurch gekennzeichnet, dass** Ergebnisdaten (E_{D}) über einen VPN-Tunnel oder über eine Offline-Verbindung von der Rechnereinheit (8) auf einen externen Computer (14) übertragen werden.

## Claims

1. A system for working on a track (2) wherein the system has a track maintenance machine (1) comprising a machine control (4) and a work unit (3) controlled thereby, with sensors (6) being arranged to monitor the work unit (3), **characterised in that** the sensors (6) are coupled to a data acquisition module (7) for a separate recording of sensor data (S_{D}), and **in that** the data acquisition module (7) is connected to a computing unit (8) in which a first algorithm (P1) for calculating result data (E_{D}) from the sensor data (S_{D}) is set up and that a monitoring device (10) is arranged for monitoring the work unit (3), which records the sensor data (S_{D}) at a lower sampling rate than the data acquisition module (7).

2. A system according to claim 1, **characterised in that** the computing unit (8) is set up to calculate at least one parameter from the sensor data (S_{D}) recorded during a work sequence, with the computing unit (8) in particular being coupled to the machine control (4) to automatically specify optimised working parameters.

3. A system according to claim 1 or 2, **characterised in that** the data acquisition module (7) is set up for multi-channel data recording and is coupled as a slave to the computing unit (8) designed as a master.

4. A system according to one of the claims 1 to 3, **characterised in that** the computing unit (8) is coupled to a database (18) via communication means (17) in order to receive program data for modifying the first algorithm (P₁) or for setting up a second algorithm (P₂).

5. A system according to claim 4, **characterised in that** the communication means (17) include a VPN router.

6. A system according to one of the claims 1 to 5, **characterised in that** the computing unit (8) is connected to a storage device (15) to store sensor data (S_{D}) and/or result data (E_{D}).

7. A system according to one of the claims 1 to 6, **characterised in that** the computing unit (8) is coupled to a computer network (13) via a modem (12) for data transmission.

8. A system according to one of the claims 1 to 7, **characterised in that** it comprises a tamping unit and/or a stabilising unit as a work unit (3).

9. A system according to claim 8, **characterised in that** a movement sensor is arranged as a sensor (6) for recording a vibration cycle.

10. A method for operating a system according to one of the claims 1 to 9, wherein sensor signals (S_{S}) for monitoring the work unit (3) are generated by means of the sensors (6), **characterised in that** the sensor signals (S_{S}) are supplied to the data acquisition module (7) for separate sensor data recording, and **in that** result data (E_{D}) are calculated from the sensor data (S_{D}) by means of the first algorithm (P₁) set up in the computing unit (8).

11. A method according to claim 10, **characterised in that** parameters of a work sequence are calculated as result data (E_{D}) and transmitted to the machine control (4).

12. A method according to claim 10 or 11, **characterised in that** program data are transmitted to the computing unit (8) for modifying the first algorithm (P₁) or for setting up a second algorithm (P₂).

13. A method according to claim 12, **characterised in that,** in a first step, new program data are loaded into a storage of the computing unit (8) and if, in a second step, the new program data are activated after a restart of the computing unit (8).

14. A method according to one of the claims 10 to 13, **characterised in that** result data (E_{D}) is transferred from the computing unit (8) to an external computer (14) via a VPN tunnel or via an offline connection.

## Revendications

1. Système d'usinage d'une voie ferrée (2), dans lequel le système présente une machine de pose de voie (1) qui comprend une commande de machine (4) et un module de travail (3) commandé avec elle, dans lequel des capteurs (6) sont disposés pour la surveillance du module de travail (3), **caractérisé en ce que** les capteurs (6) sont couplés à un module de détection de données (7) pour la détection séparée de données de capteur (S_{D}) et que le module de détection de données (7) est connecté à une unité centrale (8) dans laquelle un premier algorithme (P₁) est configuré pour le calcul de données de résultat (E_{D}) à partir des données de capteur (S_{D}), et qu'une installation de surveillance (10) est disposée pour la surveillance du module de travail (3), laquelle détecte les données de capteur (S_{D}) avec un taux d'échantillonnage inférieur au module de détection de données (7).

2. Système selon la revendication 1, **caractérisé en ce que** l'unité centrale (8) est configurée pour le calcul d'au moins une grandeur caractéristique à partir des données de capteur (SD) détectées pendant un processus de travail et que l'unité centrale (8) est notamment couplée à la commande de machine (4) pour la prédéfinition automatisée de paramètres de travail optimisés.

3. Système selon la revendication 1 ou 2, **caractérisé en ce que** le module de détection de données (7) est configuré pour la détection de données multicanal et couplé en tant qu'esclave à l'unité centrale (8) réalisée en tant que maître.

4. Système selon une des revendications 1 à 3, **caractérisé en ce que** l'unité centrale (8) est couplée à une base de données (18) par le biais de moyens de communication (17) pour recevoir des données de programme pour la modification du premier algorithme (P₁) ou pour la configuration d'un second algorithme (P₂).

5. Système selon la revendication 4, **caractérisé en ce que** les moyens de communication (17) comprennent un routeur VPN.

6. Système selon une des revendications 1 à 5, **caractérisé en ce que** l'unité centrale (8) est connectée à une installation de mémoire (15) pour mémoriser des données de capteur (S_{D}) et/ou données de résultat (E_{D}).

7. Système selon une des revendications 1 à 6, **caractérisé en ce que** l'unité centrale (8) est couplée à un réseau d'ordinateurs (13) pour la transmission de données par le biais d'un modem (12).

8. Système selon une des revendications 1 à 7, **caractérisé en ce qu'**il comprend en tant que module de travail (3) un module de bourrage et/ou un module de stabilisation.

9. Système selon la revendication 8, **caractérisé en ce qu'**un capteur de mouvement est disposé en tant que capteur (6) pour la détection d'un cycle d'oscillation.

10. Procédé d'exploitation d'un système selon une des revendications 1 à 9, dans lequel des signaux de capteur (S_{S}) sont générés au moyen des capteurs (6) pour la surveillance du module de travail (3), **caractérisé en ce que** les signaux de capteur (S_{S}) sont acheminés au module de détection de données (7) pour la détection de données de capteur séparée et que des données de résultat (E_{D}) sont calculées à partir des données de capteur (S_{D}) au moyen du premier algorithme (P₁) configuré dans l'unité centrale (8).

11. Procédé selon la revendication 10, **caractérisé en ce que** des valeurs caractéristiques d'un processus de travail sont calculées en tant que données de résultat (E_{D}) et transférées à la commande de machine (4).

12. Procédé selon la revendication 10 ou 11, **caractérisé en ce que** des données de programme sont transmises à l'unité centrale (8) pour la modification du premier algorithme (P₁) ou pour la configuration d'un second algorithme (P₂).

13. Procédé selon la revendication 12, **caractérisé en ce que** de nouvelles données de programme sont chargées dans une mémoire de l'unité centrale (8) dans une première étape et que les nouvelles données de programme sont activées après un redémarrage de l'unité centrale (8) dans une seconde étape.

14. Procédé selon une des revendications 10 à 13, **caractérisé en ce que** des données de résultat (E_{D}) sont transmises par l'unité centrale (8) à un ordinateur externe (14) par le biais d'un tunnel VPN ou par le biais d'une connexion hors ligne.
